# EUROPÄISCHE PATENTANMELDUNG

(11) **EP 1 507 329 A1**
(43) Veröffentlichungstag der Anmeldung: **16.02.2005**
(21) Anmeldenummer: 04018643.9
(22) Anmeldetag: 06.08.2004
(51) Int. Cl.: H02K 41/03, B66B 11/04, H02K 3/47

(54) **Elektromotor, Aufzug mit einer mit einem Elektromotor bewegbaren Kabine und Aufzug mit einer Kabine und mit einem Elektromotor zur Bewegung eines Führungselements relativ zu der Kabine**

(30) Priorität: 14.08.2003 EP 03405593
(71) Anmelder: INVENTIO AG, CH-6052 Hergiswil (CH)
(72) Erfinder: Zhou, Tian, 6015 Reussbühl (CH)

(57) **Zusammenfassung**

Der Elektromotor (10) weist einen Primärteil (11) zur Erzeugung eines wandernden Magnetfeldes und einen Sekundärteil (12) zur Bereitstellung eines statischen Magnetfeldes auf, wobei der Sekundärteil (12) und der Primärteil (11) unter einer Wirkung des wandernden Magnetfeldes relativ zueinander bewegbar sind. Der Sekundärteil (12) umfasst eine Vorrichtung (13, 13') mit einem Substrat und einer auf das Substrat aufgebrachten Leiterbahn in Form einer Schichtstruktur, wobei die Leiterbahn zwecks Erzeugung des statischen Magnetfeldes mit einem elektrischen Strom versorgbar ist.

## Beschreibung

Die Erfindung bezieht sich auf einen Elektromotor gemäss dem Oberbegriff des Anspruchs 1 und einen Aufzug mit einer mittels eines solchen Elektromotors längs einer Bahn bewegbaren Kabine. Ein weiterer Gegenstand der Erfindung ist ein Aufzug mit einer längs mindestens einer Führungsfläche bewegbaren Kabine, mit einem Führungselement, welches an der Kabine bewegbar angeordnet und mit der Führungsfläche in Kontakt gebracht ist, und mit einem Elektromotor zur Bewegung des Führungselements relativ zu der Kabine.

Elektromotoren der vorstehend genannten Art sind aus den europäischen Patentanmeldungen EP 0 949 748 A1 und EP 0 949 749 A1 bekannt. In diesen Patentanmeldungen sind Linearmotoren beschrieben, die jeweils einen Primärteil zur Erzeugung eines wandernden Magnetfeldes und einen Sekundärteil zur Bereitstellung eines statischen Magnetfeldes aufweisen, wobei der Sekundärteil und der Primärteil räumlich durch einen Luftspalt getrennt sind und unter einer Wirkung des wandernden Magnetfeldes relativ zueinander bewegbar sind. Zur Erzeugung des wanderndes Magnetfeldes umfasst der Primärteil mehrere flache, eisenlose Spulen, die als gedruckte Schaltungen auf ein isolierendes Substrat aufgebracht sind. Zur Bereitstellung des statischen Magnetfelds sind im Sekundärteil mehrere Permanentmagnete derart angeordnet sind, dass an einer Oberfläche des Sekundärteils eine periodische magnetische Struktur ausgebildet ist. Als Spulen für den Primärteil sind mehrere Konfigurationen vorgeschlagen, die für eine Versorgung mit Wechselstrom mit einer Phase oder mit mehreren Phasen ausgebildet sind. Diese Linearmotoren haben den Nachteil, dass der Sekundärteil wegen seiner Bestückung mit Permanentmagneten ein hohes Gewicht aufweist. Weiterhin führt die Verwendung von Permanentmagneten zu hohen Stückkosten, da einerseits Permanentmagnete in der Regel verhältnismässig teuer sind und weiterhin die Herstellung eines aus einer Vielzahl von Permanentmagneten zusammengesetzten Sekundärteils aufwändig und somit mit hohen Kosten verbunden ist. Der Aufwand bei der Herstellung des Sekundärteils steigt insbesondere - mit entsprechenden Folgen für die Herstellungskosten - wenn die Permanentmagnete in ihren Abmessungen möglichst genau übereinstimmen müssen und mit möglichst grosser Präzision derart parallel nebeneinander angeordnet werden sollen, dass ihre Oberflächen eine ebene Fläche bilden. Letzteres ist relevant bei Präzisionsmotoren und bei hocheffizienten Motoren, die einen engen Luftspalt zwischen dem Primärteil und dem Sekundärteil aufweisen.

In der europäischen Patentanmeldung EP 0 785 162 A1 ist ein Aufzug mit einem Antriebssystem für eine Kabine auf der Basis eines als Synchronmotor betriebenen Linearmotors offenbart. Der Linearmotor weist einen Primärteil zur Erzeugung eines wandernden Magnetfeldes und einen Sekundärteil zur Bereitstellung eines statischen Magnetfeldes auf. Der Sekundärteil besteht aus einer Vielzahl von Permanentmagneten, die an einer Wand eines Aufzugsschachtes längs der Bahn der Kabine angeordnet sind. Der Primärteil besteht aus Spulen, die an einer Seite der Kabine angeordnet sind. Diese Konstruktion des Sekundärteils führt zu hohen Material- und Herstellungskosten und die Installation des Sekundärteils im Aufzugsschacht ist wegen des grossen Gewichts der Permanentmagnete aufwändig. Da der Sekundärteil permanent hohe statische Magnetfelder auf der gesamten Länge des Aufzugsschachts bereitstellt, müssen bei der Installation des Sekundärteils und allgemein bei Wartungsarbeiten im Aufzugsschacht geeignete Vorsichtsmassnahmen getroffen werden, um unerwünschte Wirkungen der Magnetfelder zu vermeiden.

In US 2003/0000778 A1 ist ein Aufzug offenbart, dessen Kabine mittels eines Linearmotors bewegt werden kann. Der Sekundärteil des Linearmotors kann entweder gewickelte Spulen oder eine Kombination von solchen Spulen und Permanentmagneten umfassen. Derartige Spulen sind in der Regel auf einen Eisenkern gewickelt. Der Linearmotor hat deshalb ein hohes Gewicht und ein grosses Volumen. Seine Herstellung ist ferner aufwändig, da er aus vielen Einzelteilen zusammengesetzt werden muss.

Es ist die Aufgabe der vorliegenden Erfindung, die genannten Nachteile der bekannten Elektromotoren zu vermeiden und einen Elektromotor zu schaffen, der kompakt aufgebaut ist, ein geringes Gewicht aufweist und die Voraussetzung für eine kostengünstige Herstellung mit sich bringt. Der Elektromotor soll - geeignet dimensioniert - in einem Aufzug als Antrieb zur Bewegung einer Kabine oder zur Bewegung eines Führungselements relativ zu einer Kabine verwendbar sein.

Diese Aufgabe wird gelöst durch einen Elektromotor mit den Merkmalen des Anspruchs 1. Die von diesem Anspruch abhängigen Ansprüche definieren vorteilhafte Ausführungsformen dieses Elektromotors.

Der erfindungsgemässe Elektromotor weist einen Primärteil zur Erzeugung eines wandernden Magnetfeldes und einem Sekundärteil zur Bereitstellung eines statischen Magnetfeldes auf, wobei der Sekundärteil und der Primärteil unter einer Wirkung des wandernden Magnetfeldes relativ zueinander bewegbar sind. Der Sekundärteil umfasst eine auf einem Substrat angeordnete Leiterbahn, die zwecks Erzeugung des statischen Magnetfeldes mit einem elektrischen Strom versorgbar ist.

Die spezielle Konstruktion des Sekundärteils ermöglicht die Bereitstellung eines statischen Magnetfelds ohne Verwendung von Permanentmagneten. Das zum Betrieb des Elektromotors benötigte statische Magnetfeld wird elektromagnetisch erzeugt, indem durch die Leiterbahn ein elektrischer Strom geschickt wird. Alle Nachteile, die die Verwendung von Permanentmagneten mit sich bringt, sind somit vermieden.

Erfindungsgemäss umfasst der Sekundärteil als ein wesentliches Grundelement ein Substrat, welches als Träger der Leiterbahn dient und für die gewünschte mechanische Stabilität des Sekundärteils sorgt. Dadurch ist die Voraussetzung geschaffen für die Konstruktion eines Sekundärteils, der kompakt ist, ein geringes Gewicht aufweist und kostengünstig herstellbar ist. Das Substrat und die Leiterbahn können als eine Schichtstruktur ausgebildet sein. Die Leiterbahn kann beispielsweise aus einer dünnen, elektrisch leitfähigen Schicht gebildet werden, die auf das Substrat aufgebracht und gegebenenfalls geeignet strukturiert wird. Im Hinblick auf die Konstruktion und die Herstellung des Sekundärteils sind dabei die Technologien anwendbar, die für gedruckte Schaltungen entwickelt wurden. Dies erlaubt eine kostengünstige Fertigung.

Das Substrat kann aus einem Material hoher Festigkeit gefertigt werden. Dies ermöglicht die Verwendung dünner Substrate mit einer grossen Oberfläche. Somit kann ein Sekundärteil geschaffen werden, der in einer Dimension extrem schmal ist und somit durch einen besonders engen Luftspalt zwischen zwei Polen eines Polpaars eines Primärteils bewegt werden kann. Da die Leiterbahn aus einer dünnen leitfähigen Schicht gebildet werden kann, ist es möglich, einen Sekundärteil zu schaffen, der im Bereich der Leiterbahn eine relativ glatte Oberfläche aufweist. Dadurch wird es möglich, einen Elektromotor zu schaffen, bei dem der Sekundärteil in einem besonders geringen Abstand zum Primärteil angeordnet werden kann und der deshalb mit hoher Effizienz betreibbar ist.

Der Elektromotor kann in einer Vielzahl von Geometrien realisiert sein. Die Form des Substrats kann - jeweils angepasst an die Form des Primärteils - entsprechend gewählt werden. Der Elektromotor kann beispielsweise als rotierender Motor konstruiert sein. Der Elektromotor kann aber auch für andere Bewegungsarten ausgelegt sein, beispielsweise als Linearmotor. Das Substrat kann beispielsweise die Form eines Zylinders aufweisen. In diesem Fall kann die Leiterbahn beispielsweise auf dem Mantel des Zylinders angeordnet werden, um einen um die Längsachse des Zylinders rotierbaren Sekundärteil zu bilden. Der Sekundärteil kann auch als eine flache, um eine Achse rotierbare Scheibe ausgebildet sein. In diesem Fall stehen die Grundflächen der Scheibe für die Anordnung der Leiterbahn zur Verfügung. Alternativ, beispielsweise im Falle eines Linearmotors, kann der Sekundärteil auch als flache, längs einer Bahn mit einer endlichen Länge bewegbare Platte ausgebildet sein, wobei die Grundflächen der Platte für die Anordnung der Leiterbahn zur Verfügung stehen.

Der Sekundärteil einer Ausführungsform des erfindungsgemässen Elektromotors kann als eine Schichtstruktur, hergestellt durch Aufbringen verschiedener Schichten auf das Substrat, konzipiert sein. Die Schichten können nacheinander aufgebracht werden und gegebenenfalls geeignet strukturiert werden. Auf diese Weise können auf dem Substrat dreidimensionale Strukturen aus Materialien mit unterschiedlichen Eigenschaften aufgebracht werden. Einzelne Schichten können aus einem elektrisch isolierenden Material bestehen oder Bereiche aus einem elektrisch isolierenden Material umfassen. Die Leiterbahn kann aus Leiterbahnabschnitten, die jeweils in verschiedenen Schichten der Schichtstruktur ausgebildet sind, zusammengesetzt sein. Einzelne Abschnitte der Leiterbahn können sich beispielsweise in verschiedenen Ebenen überkreuzen und im Bereich der Überkreuzung durch eine elektrisch isolierende Schicht getrennt sein. Weiterhin besteht die Möglichkeit, einzelne Abschnitte der Leiterbahn in verschiedenen durch eine Zwischenschicht getrennte Schichten anzuordnen und in der Zwischenschicht einen elektrisch leitfähigen Bereich vorzusehen, der eine elektrische Verbindung zwischen diesen Abschnitten der Leiterbahn herstellt.

Schichten der genannten Art können auch auf beiden Seiten des Substrats aufgebracht und gegebenenfalls strukturiert werden. Bei dem Sekundärteil einer weiteren Ausführungsform des erfindungsgemässen Elektromotors ist beispielsweise vorgesehen, dass ein erster Teil der Leiterbahn an einer ersten Oberfläche des Substrats und ein zweiter Teil der Leiterbahn an einer zweiten Oberfläche des Substrats ausgebildet ist, wobei eine elektrische Verbindung zwischen dem ersten und dem zweiten Teil hergestellt ist. Dies ermöglicht es, der Leiterbahn eine besonders komplexe geometrische Struktur zu verleihen.

Bei einer Variante des Sekundärteils kann beispielsweise mindestens ein Abschnitt der Leiterbahn die Form einer Spule aufweisen, wobei jede Spule eine oder mehrere Windungen umfasst. Die Spule kann auf einer Seite des Substrats angeordnet sein, sie kann aber auch aus verschiedenen Abschnitten der Leiterbahn zusammengesetzt sein, die auf verschiedenen Seiten des Substrats angeordnet sind und elektrisch miteinander verbunden sind.

In einer weiteren Variante des Sekundärteils können mehrere seriell angeordnete Abschnitte der Leiterbahn jeweils die Form einer Spule haben, wobei die Spulen derart ausgebildet sind, dass bei einem Stromfluss durch die Leiterbahn benachbarte Spulen jeweils Magnetfelder mit unterschiedlicher Polarität erzeugen. Beispielsweise kann die Leiterbahn derart angeordnet sein, dass bei einer Versorgung der Leiterbahn mit einem Gleichstrom an einer Oberfläche des Sekundärteils ein statisches Magnetfeld erzeugt wird, dessen Polarität eine periodische Umkehr der Polarität längs der Richtung, in der der Sekundärteil relativ zum Primärteil bewegbar ist, aufweist. Auf diese Weise kann ein Sekundärteil zur Bereitstellung einer grossen Zahl magnetischer Pole ausgebildet werden. Bei einer geeigneten Anordnung der Leiterbahn kann die auf dem Substrat zur Verfügung stehende Fläche effizient genutzt werden. Dies ist relevant für die Optimierung der Effizienz des Elektromotors und die Genauigkeit, mit der die Bewegung des Sekundärteils relativ zum Primärteil während des Betriebs des Motors kontrolliert werden kann.

In einer Weiterentwicklung des Sekundärteils können zur Erzeugung des statischen Magnetfelds auch mehrere Leiterbahnen vorgesehen werden, die unabhängig voneinander mit einem elektrischen Strom versorgbar sind. Mit einem derart ausgebildeten Sekundärteil kann ein statisches Magnetfeld mit einer besonders grossen Energiedichte erzeugt werden. Auf der Grundlage dieses Konzepts kann die maximale Kraft, mit der der Sekundärteil während des Betriebs des Motors relativ zum Primärteil bewegt wird, zusätzlich erhöht werden.

Eine Weiterentwicklung des erfindungsgemässen Elektromotors weist einen Primärteil auf, der eine auf einem Substrat angeordnete Leiterbahn umfasst, wobei diese Leiterbahn zwecks Erzeugung des wandernden Magnetfeldes mit einem elektrischen Strom, dessen Stromstärke mit der Zeit variiert, versorgbar ist. Bei dieser Konstruktion des Elektromotors ist der Primärteil nach demselben technologischen Konzept realisierbar, auf dem erfindungsgemäss der Design des Sekundärteils beruht. Zur Erzeugung des wandernden Magnetfelds ist somit eine elektrische Struktur vorgesehen, die als eine Schichtstruktur realisierbar ist, beispielsweise durch Aufbringung von dünnen Schichten auf ein Substrat und gegebenenfalls durch eine Strukturierung dieser Schichten. Beispielswiese können mehrere seriell angeordnete Abschnitte der Leiterbahn jeweils die Form einer Spule haben, wobei die Spulen derart ausgebildet sind, dass bei einem Stromfluss durch die Leiterbahn benachbarte Spulen jeweils Magnetfelder mit unterschiedlicher Polarität erzeugen. Somit sind sowohl der Primärteil als auch der Sekundärteil realisierbar als Schichtstrukturen, die dünne auf ein Substrat aufgebrachte elektrisch leitfähige Bereiche umfassen. Demnach sind sowohl der Primärteil als auch der Sekundärteil mit Techniken herstellbar, die für die Fabrikation von gedruckten Schaltungen im Einsatz sind.

Diese Variante des erfindungsgemässen Elektromotors hat mehrere Vorteile. Für den Primärteil und den Sekundärteil können jeweils dünne Substrate, die zudem ein geringes Gewicht aufweisen, verwendet werden. Im Gegensatz zu konventionellen Motorkonstruktionen werden im vorliegenden Fall für die Erzeugung des magnetischen Wanderfeldes bzw. die Erzeugung des statischen Magnetfelds weder ein ferromagnetischer Kern noch gewickelte Spulen noch Permanentmagnete benötigt. Diese Variante des Elektromotors kann deshalb besonders leicht, kompakt und kostengünstig gebaut werden. Die Möglichkeit, im Rahmen der Erfindung den Primärteil und den Sekundärteil ohne ferromagnetische Kerne und ohne Permanentmagnete realisieren zu können, vereinfacht auch die Kontrolle der Bewegung des Sekundärteils während des Betriebs des Elektromotors, da die Störkräfte, die bei konventionellen Elektromotoren zwischen einem (in der Regel mit Zähnen und Nuten versehenen) ferromagnetischen Kern und dem Sekundärteil auftreten, entfallen. Wegen des geringen Gewichts ist der Motor besonders gut geeignet zur Steuerung von schnellen Bewegungen. Da bei einer Steuerung des Motors nur geringe Massen beschleunigt werden müssen, können schnelle Bewegungen effizient und präzise gesteuert werden.

Bei einer Weiterentwicklung der vorstehend genannten Variante des erfindungsgemässen Elektromotors ist vorgesehen, dass der Primärteil mehrere auf einem Substrat angeordnete Leiterbahnen umfasst und dass jede dieser Leiterbahnen zwecks Erzeugung des wandernden Magnetfeldes jeweils mit einem elektrischen Strom, dessen Stromstärke mit der Zeit variiert, versorgbar ist. Da jede der Leiterbahnen unabhängig mit einer Stromquelle angesteuert werden können, kann nach diesem Konzept ein mehrphasig ansteuerbarer Elektromotor entworfen werden.

Der erfindungsgemässe Elektromotor kann auch in einem Aufzug als Antrieb für eine längs einer Bahn bewegbare Kabine verwendet werden. Der Elektromotor kann in dem Aufzug beispielsweise derart eingebaut sein, dass der Primärteil ortsfest längs der Bahn und der Sekundärteil an der Kabine angeordnet ist. Alternativ kann der Sekundärteil ortsfest längs der Bahn und der Primärteil an der Kabine angeordnet sein. Weiterhin kann der Aufzug mit Mitteln zur Führung der Kabine längs der Bahn ausgestattet und der Primärteil und der Sekundärteil derart an diesen Mitteln angeordnet sein, dass der Primärteil und der Sekundärteil in einem Abstand zueinander geführt sind, wenn die Kabine längs der Bahn bewegt wird. Letzteres hat den Vorteil, dass jede Bewegung des Elektromotors und jede Bewegung der Kabine durch eine gemeinsame Führung kontrolliert ist. Eine separate Führung für den Primärteil bzw. den Sekundärteil des Elektromotors kann auf diese Weise eingespart werden.

In einem Aufzug, welcher eine längs mindestens einer Führungsfläche bewegbare Kabine und ein Führungselement, welches an der Kabine bewegbar angeordnet und mit der Führungsfläche in Kontakt gebracht ist, umfasst, kann der erfindungsgemässe Elektromotor auch als Antrieb zur Bewegung des Führungselements relativ zur Kabine verwendet werden. Der Elektromotor kann dabei derart installiert sein, dass der Primärteil zusammen mit dem Führungselement bewegbar und der Sekundärteil ortsfest bezüglich der Kabine angeordnet ist oder dass der Sekundärteil zusammen mit dem Führungselement bewegbar und der Primärteil ortsfest bezüglich der Kabine angeordnet ist. Weiterhin kann eine Steuerung für den Elektromotor zur Reduktion von Schwingungen der Kabine, die während einer Bewegung der Kabine auftreten können, in den Aufzug integriert sein.

Im Folgenden werden Ausführungsbeispiele der Erfindung anhand verschiedener schematischer Figuren erläutert. Es zeigen:
- Fig. 1A:: Eine Ansicht eines erfindungsgemässen Elektromotors, mit einem Primärteil und einem Sekundärteil, wobei der Primärteil relativ zum Sekundärteil bewegbar ist;
- Fig. 1 B:: den Elektromotor gemäss Fig. 1 A in einem Schnitt 1B-1B;
- Fig. 2A:: eine Ansicht eines anderen erfindungsgemässen Elektromotors, mit einem Primärteil und einem Sekundärteil, wobei der Sekundärteil relativ zum Primärteil bewegbar ist;
- Fig. 2B:: den Elektromotor gemäss Fig. 2A in einem Schnitt 2B-2B;
- Fig. 3A:: den Primärteil gemäss Fig. 1A in einer detaillierteren Darstellung;
- Fig. 3B:: den Sekundärteil gemäss Fig. 1A in einer detaillierteren Darstellung;
- Fig. 3C:: den Sekundärteil gemäss Fig. 3B in einem Schnitt 3C-3C;
- Fig. 4A:: einen Aufzug mit einer Kabine und einem Führungselement zur Führung der Kabine und mit einem erfindungsgemässen Elektromotor zur Bewegung des Führungselements relativ zur Kabine;
- Fig. 4B:: den Elektromotor gemäss Fig. 4A in einem Schnitt 4B-4B;
- Fig. 5A:: einen Aufzug mit einer Kabine und einem erfindungsgemässen Elektromotor als Antrieb zur Bewegung der Kabine;
- Fig. 5B:: den Aufzug gemäss Fig. 5A in einem Schnitt 5B-5B.

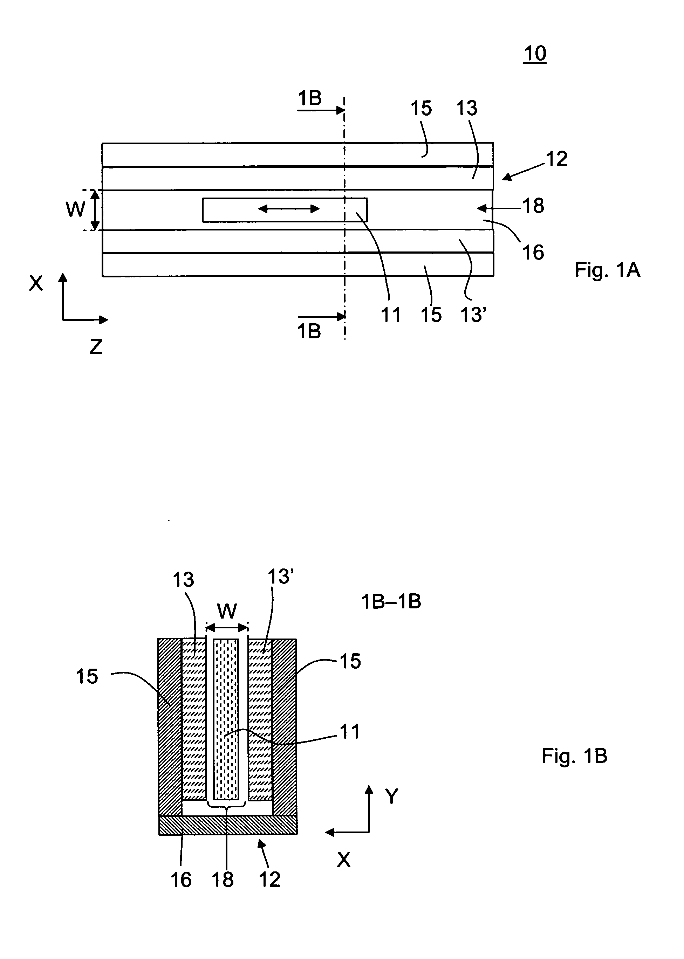

Die Fig. 1A zeigt einen Elektromotor 10 gemäss der Erfindung, der einen Primärteil 11 zur Erzeugung eines wandernden Magnetfeldes und einen Sekundärteil 12 zur Bereitstellung eines statischen Magnetfeldes umfasst. Die Fig. 1 B zeigt den Elektromotor 10 in einem Schnitt 1B-1B gemäss Fig. 1 A.

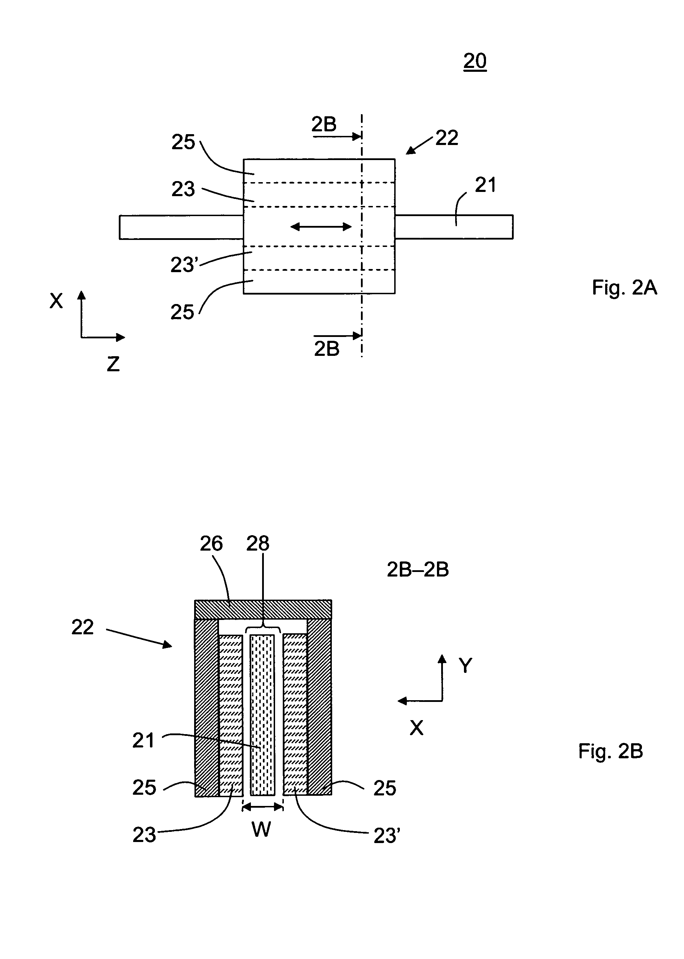

Die Fig. 2A zeigt einen Elektromotor 20 gemäss der Erfindung, der einen Primärteil 21 zur Erzeugung eines wandernden Magnetfeldes und einen Sekundärteil 22 zur Bereitstellung eines statischen Magnetfeldes umfasst. Die Fig. 2B zeigt den Elektromotor 20 in einem Schnitt 2B-2B gemäss Fig. 2A.

Die Elektromotoren 10 und 20 sind beide als Linearmotor konzipiert. Der Primärteil 11 und der Sekundärteil 12 bzw. der Primärteil 21 und der Sekundärteil 22 sind jeweils so ausgebildet, dass der Primärteil 11 relativ zum Sekundärteil 12 bzw. der Primärteil 21 relativ zum Sekundärteil 22 in der Z-Richtung eines Koordinatensystems XYZ bewegbar sind, wie in Fig. 1A durch einen Doppelpfeil am Primärteil 11 und in Fig. 2A durch einen Doppelpfeil am Sekundärteil 22 angedeutet ist.

Die Elektromotoren 10 und 20 unterscheiden sich im wesentlichen durch das Mass der Längserstreckung der Primärteile 11 bzw. 21 und der Sekundärteile 12 bzw. 22 in der jeweiligen Z-Richtung. Im Falle des Elektromotors 10 weist der Primärteil 11 im Vergleich zum Sekundärteil 12 eine geringere Erstreckung in Z-Richtung auf. Der Elektromotor 10 ist daher bevorzugt verwendbar in Anwendungen, bei denen der Primärteil 11 (im Gegensatz zum Sekundärteil 12) um eine relativ grosse Distanz bewegt werden soll. Im Falle des Elektromotors 20 hingegen weist der Primärteil 21 im Vergleich zum Sekundärteil 22 eine grössere Erstreckung in Z-Richtung auf. Der Elektromotor 20 ist daher bevorzugt verwendbar in Anwendungen, bei denen der Sekundärteil 22 (im Gegensatz zum Primärteil 21) um eine relativ grosse Distanz bewegt werden soll.

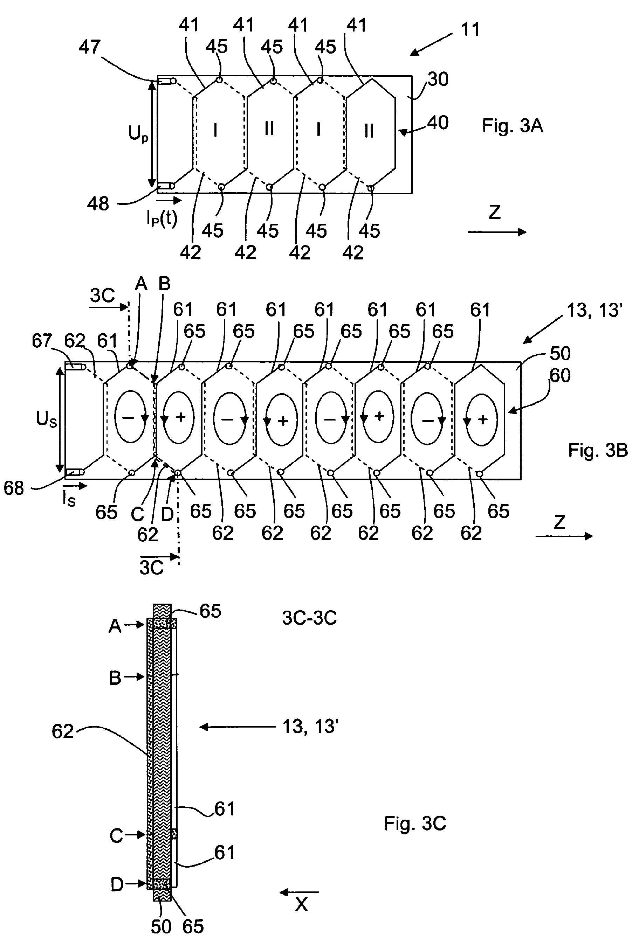

Der Sekundärteil 12 weist zwei Vorrichtungen 13, 13', die die Form einer rechteckigen Platte haben und parallel zur Z-Richtung derart in einem Abstand zueinander angeordnet sind, dass sie einen Luftspalt 18 der Breite W begrenzen. Die Vorrichtungen 13 und 13' sind jeweils an Trägern 15 befestigt, die ihrerseits an einer Grundplatte 16 fixiert sind. Der Primärteil 11 ist derart geformt und derart angeordnet, dass er in dem Luftspalt 18 in der Z-Richtung bewegbar ist. Eine konventionelle (in den Fig. 1A und 1 B nicht dargestellte) Führung ist vorgesehen, um den Primärteil 11 bei einer Bewegung relativ zum Sekundärteil 12 in der Z-Richtung zu führen. Die Vorrichtungen 13 und 13' umfassen jeweils elektromagnetische Mittel, die im Folgenden im Zusammenhang mit den Fig. 3B-C noch detaillierter beschrieben werden und jeweils zur Bereitstellung eines statischen Magnetfeldes dienen. Dieses Magnetfeld wird in der Regel so erzeugt, dass es im Luftspalt 18, unter Umständen aber auch auf den dem Luftspalt 18 abgewandten Seiten der Vorrichtungen 13 und 13' präsent ist. Um auf der dem Luftspalt abgewandten Seiten der Vorrichtungen 13 und 13' einen magnetischen Fluss auf einen möglichst kleinen Raum zu konzentrieren, können die Träger 15 aus einem weichmagnetischen Material gefertigt sein.

Der Sekundärteils 22 ist im Hinblick auf seine Struktur und seine Funktion analog zum Sekundärteil 12 ausgebildet.

Der Sekundärteil 22 weist zwei Vorrichtungen 23, 23', die die Form einer rechteckigen Platte haben und parallel zur Z-Richtung derart in einem Abstand zueinander angeordnet sind, dass sie einen Luftspalt 28 der Breite W begrenzen. Die Vorrichtungen 23 und 23' sind jeweils an Trägern 25 befestigt, die ihrerseits an einer Grundplatte 26 fixiert sind. Der Primärteil 21 ist derart geformt und derart angeordnet, dass er in dem Luftspalt 28 in der Z-Richtung bewegbar ist. Eine konventionelle (in den Fig. 2A und 2B nicht dargestellte) Führung ist vorgesehen, um den Sekundärteil 22 bei einer Bewegung relativ zum Primärteil 21 in der Z-Richtung zu führen. Die Vorrichtungen 23 und 23' umfassen jeweils elektromagnetische Mittel, die im Folgenden im Zusammenhang mit den Fig. 3B-C noch detaillierter beschrieben werden und jeweils zur Bereitstellung eines statischen Magnetfeldes dienen. Dieses Magnetfeld wird in der Regel so erzeugt, dass es im Luftspalt 28, unter Umständen aber auch auf den dem Luftspalt 28 abgewandten Seiten der Vorrichtungen 23 und 23' präsent ist. Um auf der dem Luftspalt 28 abgewandten Seiten der Vorrichtungen 23 und 23' einen magnetischen Fluss auf einen möglichst kleinen Raum zu konzentrieren, können die Träger 25 aus einem weichmagnetischen Material gefertigt sein.

Die Primärteile 11 und 22 umfassen jeweils elektromagnetische Mittel, die im Zusammenhang mit Fig. 3A noch detaillierter beschrieben werden und die die Funktion haben, ein wanderndes Magnetfeld zu erzeugen. Die genannten elektromagnetischen Mittel sind bevorzugt so ausgebildet, dass sie zur Erzeugung eines in der Z-Richtung wandernden Magnetfeldes geeignet sind.

Die Fig. 3A stellt den Primärteil 11 in einer Draufsicht in der X-Richtung dar. Die Fig. 3B zeigt - ebenfalls in einer Draufsicht in der X-Richtung - die Vorrichtung 13 bzw. die Vorrichtung 13', welche identisch übereinstimmt mit der Vorrichtung 13. Die Fig. 3C zeigt die Vorrichtung 13 bzw. 13' in einem Querschnitt 3C-3C gemäss Fig. 3B längs des in Fig. 3B durch die Punkte A, B, C und D gekennzeichneten Polygonzugs.

Der Primärteil 11 umfasst ein Substrat 30, auf dessen Grundflächen eine Leiterbahn 40 aufgebracht ist. Die Leiterbahn 40 weist zwei Enden auf, die jeweils mit einem elektrischen Anschluss 47 bzw. 48 verbunden sind. An die elektrischen Anschlüsse 47 und 48 kann eine elektrische Spannung U_{P} angelegt werden, um die Leiterbahn 40 mit einem elektrischen Strom I_{P} zu versorgen. Die Leiterbahn weist Leiterbahnabschnitte 41 und 42 auf, die jeweils auf verschiedenen Seiten des Substrats 30 angeordnet und an ihren jeweiligen Enden jeweils über eine elektrische Verbindung 45 miteinander verbunden sind. Zur Veranschaulichung sind in Fig. 3A die Leiterbahnabschnitte 41, die sich auf der dem Betrachter zugewandten Grundfläche des Substrats 30 befinden, durch jeweils durchgezogene Linien dargestellt und die Leiterbahnabschnitte 42, die sich auf der dem Betrachter abgewandten Grundseite des Substrats 30 befinden, durch jeweils gestrichelte Linien dargestellt. Die Leiterbahnabschnitte 41 und 42 sind derart in Reihe geschaltet, dass mehrere Spulen mit jeweils einer Windung auf dem Substrat 30 ausgebildet sind. Die Spulen sind dabei in der Z-Richtung - unmittelbar nebeneinander liegend - aneinander gereiht. Die Leiterbahnabschnitte 41 und 42 sind derart verbunden, dass benachbarte Spulen von dem Strom I_{P} jeweils mit entgegengesetztem Umlaufsinn durchflossen werden. In Fig. 3A sind die Bereiche des Primärteils 11, die innerhalb der jeweiligen Windung einer der Spulen liegen, in Abhängigkeit vom jeweiligen Umlaufsinn des Stroms I_{P} mit einem der Symbole "I" oder "II" gekennzeichnet. Im Betrieb des Elektromotors 10 kann der Strom I_{P} entweder ein Gleichstrom oder ein Wechselstrom sein. Das im Umfeld der Leiterbahn 40 von dem Strom I_{P} erzeugte Magnetfeld weist in den durch "I" bzw. "II" unterschiedenen Bereichen jeweils eine unterschiedliche (entgegengesetzte) Polarität auf. Falls I_{P} ein Gleichstrom ist, dann entsteht ein statisches Magnetfeld, das bei einem Übergang zwischen den Bereichen "I" und "II" jeweils die Polarität wechselt. Falls I_{P} ein Wechselstrom ist, dann wechselt die jeweilige Polarität als Funktion der Zeit t und es entsteht ein wanderndes Magnetfeld, welches in der Z-Richtung wandert.

Wie die Fig. 3B-C zeigen, entspricht der Aufbau der im Sekundärteil 12 angeordneten Vorrichtungen 13 und 13' im wesentlichen dem Aufbau des Primärteils 11, wenn man absieht von den jeweils unterschiedlichen Erstreckungen der Vorrichtungen 13, 13' bzw. des Primärteils 11 in der Z-Richtung.

Die im Sekundärteil 12 angeordneten Vorrichtungen 13, 13' umfassen jeweils ein Substrat 50, auf dessen Grundflächen eine Leiterbahn 60 aufgebracht ist. Die Leiterbahn 60 weist zwei Enden auf, die jeweils mit einem elektrischen Anschluss 67 bzw. 68 verbunden sind.

An die elektrischen Anschlüsse 67 und 68 kann eine elektrische Spannung U_{S} angelegt werden, um die Leiterbahn 60 mit einem elektrischen Strom I_{S} zu versorgen. Die Leiterbahn weist Leiterbahnabschnitte 61 und 62 auf, die jeweils auf verschiedenen Seiten des Substrats 50 angeordnet und an ihren jeweiligen Enden jeweils über eine elektrische Verbindung 65 miteinander verbunden sind. Zur Veranschaulichung sind in Fig. 3B die Leiterbahnabschnitte 61, die sich auf der dem Betrachter zugewandten Grundfläche des Substrats 50 befinden, durch jeweils durchgezogene Linien dargestellt und die Leiterbahnabschnitte 62, die sich auf der dem Betrachter abgewandten Grundseite des Substrats 50 befinden, durch jeweils gestrichelte Linien dargestellt. Die Leiterbahnabschnitte 61 und 62 sind derart in Reihe geschaltet, dass mehrere Spulen mit jeweils einer Windung auf dem Substrat 50 ausgebildet sind. Die Spulen sind dabei in der Z-Richtung - unmittelbar nebeneinander liegend - aneinander gereiht. Die Leiterbahnabschnitte 61 und 62 sind derart verbunden, dass benachbarte Spulen von dem Strom I_{S} jeweils mit entgegengesetztem Umlaufsinn durchflossen werden. In Fig. 3B sind die Bereiche der Vorrichtung 13 bzw. 13', die innerhalb der jeweiligen Windung einer der Spulen liegen, in Abhängigkeit vom jeweiligen Umlaufsinn des Stroms I_{S} mit einem Pfeil, der die jeweilige Umlaufsinn des Stroms I_{S} angibt, und einem der Symbole "+" oder "-" gekennzeichnet. Im Betrieb des Elektromotors 10 ist der Strom I_{S} ein Gleichstrom. Das im Umfeld der Leiterbahn 60 von dem Strom I_{S} erzeugte Magnetfeld ist ein statisches Magnetfeld und weist in den durch "+" bzw. "-" unterschiedenen Bereichen jeweils eine unterschiedliche (entgegengesetzte) Polarität auf.

Die Bereiche "I" und "II" des Primärteils 11 haben dieselbe Erstreckung in der Z-Richtung. Die Bereiche "+" und "-" der Vorrichtungen 13 bzw. 13' haben jeweils dieselbe Erstreckung in der Z-Richtung. Der Sekundärteil 12 ist insofern auf den Primärteil 11 abgestimmt, als die Bereiche "+" bzw. "-" der Vorrichtungen 13 bzw. 13' im wesentlichen dieselbe Erstreckung in der Z-Richtung aufweisen wie die Bereiche "I" bzw. "II".

Um im Betrieb des Elektromotors 10 den Primärteil 11 gegenüber dem Sekundärteil 12 zu bewegen, wird als Strom I_{S} ein Gleichstrom und als Strom I_{P} ein Wechselstrom gewählt. In diesem Fall werden der Primärteil 11 und der Sekundärteil 12 synchron mit dem vom Strom I_{P} generierten, in der Z-Richtung längs dem Primärteil 11 wandernden Magnetfeld bewegt. Ob der Primärteil 11 in der (+Z)-Richtung oder in der hierzu entgegengesetzten (-Z)-Richtung bewegt wird, wird bestimmt durch die momentane Phasenlage des Wechselstroms I_{P} in Abhängigkeit von der momentanen Position des Primärteils 11 relativ zum Sekundärteil 12. Um eine Bewegung des Primärteils 11 relativ zum Sekundärteil 12 zu verhindern, stehen mehrere Möglichkeiten zur Auswahl: Als Strom I_{P} kann ebenfalls ein Gleichstrom gewählt werden oder es kann I_{P}=0 oder I_{S}=0 realisiert werden. Um den Betrieb des Elektromotors 10 jeweils zu kontrollieren, ist deshalb eine (in den Fig. 1A-B und 3A-C nicht dargestellte) Steuerung vorgesehen, die in Abhängigkeit von der momentanen Position des Primärteils 11 relativ zum Sekundärteil 12 jeweils den Strom I_{S} und den Strom I_{P} hinsichtlich Amplitude, Phasenlage und Frequenz steuert.

Die Substrate 30 und 50 können bevorzugt aus einem elektrisch isolierenden, eine hohe Festigkeit aufweisenden Material gefertigt werden, beispielsweise aus einem Kunststoff oder aus einem keramischen Material. Es ist von Vorteil, wenn die Substrate 30 und 50 aus einem nicht-ferromagnetischen Material gefertigt werden. In diesem Fall können im Betrieb Störkräfte zwischen dem Primärteil 11 und dem Sekundärteil 12 vermieden werden und somit die relativen Bewegungen zwischen dem Primärteil 11 und dem Sekundärteil 12 mit erhöhter Genauigkeit kontrolliert werden.

Der Aufbau der im Sekundärteil 12 angeordneten Vorrichtungen 13 und 13' und des Primärteils 11 können im Rahmen der Erfindung vielfältig modifiziert werden. Die Leiterbahnen 40 und 60 könnten jeweils durch eine isolierende Schicht bedeckt sein, beispielsweise derart, dass die Oberflächen des Primärteils 11 bzw. der Vorrichtungen 13 bzw. 13' durch eine ebene isolierende Schicht gebildet werden. Die Leiterbahnen 40 und/oder 50 könnten alternativ derart geführt sein, dass die Bereiche "I" bzw. "II" und/oder "+" bzw. "-" jeweils von Leiterbahnabschnitten umgeben sind, die jeweils eine Spule mit mehreren Windungen bilden. Ferner können die genannten Spulen auch von Leiterbahnabschnitten gebildet sein, die lediglich auf einer Seite der Substrate 30 bzw. 50 ausgebildet sind. Spulen mit mehreren Windungen können beispielsweise in Schichtstrukturen aus mehreren Schichten, die jeweils elektrisch leitende und elektrisch isolierende Bereiche umfassen, ausgebildet sein. Die verschiedenen Schichten können sukzessive auf das Substrat 30 bzw. 50 aufgetragen und gegebenenfalls geeignet strukturiert werden.

Der Primärteil gemäss Fig. 3A stellt ein einfaches Beispiel für einen einphasig ansteuerbaren Primärteil dar. Alternativ kann der Primärteil 11 auch mit mehreren Leiterbahnen versehen sein, die unabhängig voneinander mit einem elektrischen Strom versorgt werden können. In diesem Fall könnten in die Leiterbahnen verschiedene Wechselströme mit jeweils unterschiedlicher Phase eingespeist werden, um ein wanderndes Magnetfeld zu erzeugen. Die Anordnung der verschiedenen im Primärteil 11 angeordneten Leiterbahnen kann geometrisch abgestimmt werden bezüglich der Anordnung der mit "+" bzw. "-" bezeichneten Bereiche der Vorrichtungen 13 bzw. 13', um den Elektromotor 11 zu optimieren. Konzepte für derartige Optimierungen des Primärteils sind beispielsweise aus den Patentanmeldungen EP 0 949 749 A1 oder WO 00/49702 A1 bekannt.

Der Sekundärteil 12 umfasst zwei Vorrichtungen 13 und 13', die identisch aufgebaut und ausserdem symmetrisch bezüglich dem Primärteil 11 angeordnet sind. Diese Anordnung hat den Vorteil, dass während des Betriebs des Elektromotors 10 keine Kräfte zwischen dem Primärteil 11 und dem Sekundärteil 12 auftreten, die senkrecht zur Z-Richtung (d.h. der Richtung, in der der Primärteil 11 relativ zum Sekundärteil 12 bewegbar ist) wirken. Alternativ könnte der Sekundärteil 12 auch durch einen Sekundärteil ersetzt werden, der lediglich eine der Vorrichtungen 13 bzw. 13' aufweist.

Die obigen Angaben zum Elektromotor 10 gemäss der Fig. 1A-B sind analog auf den Elektromotor 20 gemäss Fig. 2A-B übertragbar, wobei lediglich zu beachten ist, dass der Primärteil 21 eine grössere Längserstreckung in der Z-Richtung aufweist als der Sekundärteil 22. Dementsprechend können der Primärteil 21 denselben Aufbau wie der in Fig. 3A dargestellte Primärteil 11 und die Vorrichtungen 23, 23' denselben Aufbau wie die in Fig. 3B dargestellten Vorrichtungen 13, 13' haben, mit dem wesentlichen Unterschied dass der Primärteil 21 im Vergleich zu den Vorrichtungen 23, 23' eine grössere Anzahl von Spulen - jeweils in einer Reihe in der X-Richtung nacheinander angeordnet - aufweisen sollte, damit der Sekundärteil 22 längs der gesamten Länge des Primärteils 21 bewegbar ist, wenn während des Betriebs des Elektromotors 20 ein in der Z-Richtung längs des Primärteils 21 wanderndes Magnetfeld erzeugt wird.

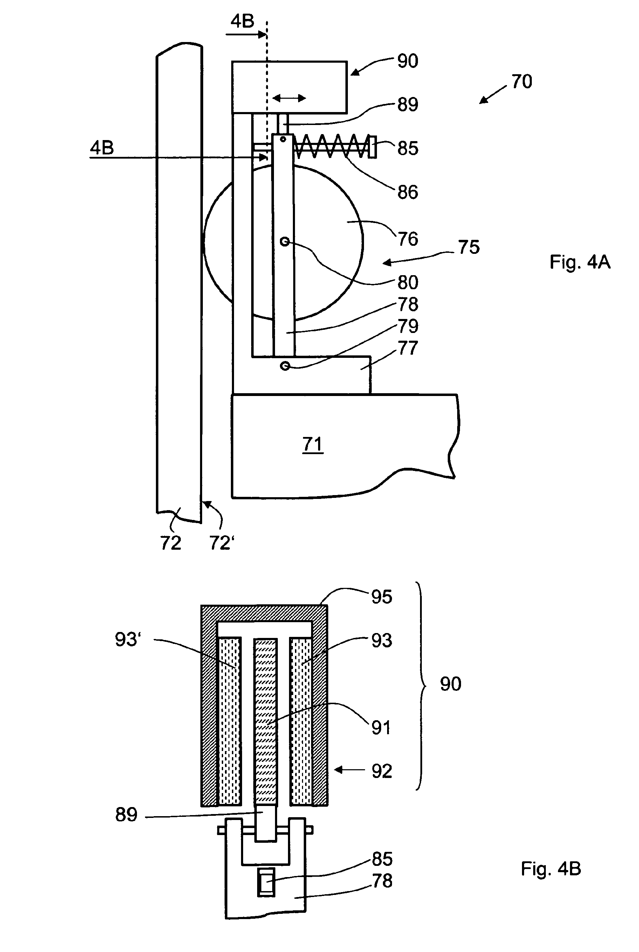

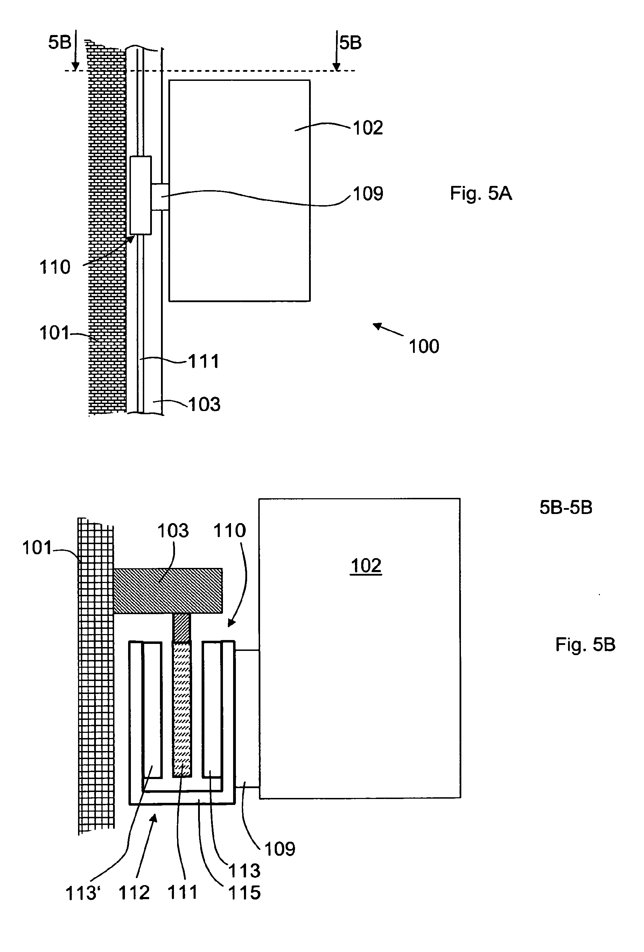

Die Fig. 4A-B und 5A-B zeigen zwei verschiedene Verwendungen für einen gemäss der Erfindung ausgebildeten Elektromotor in einem Aufzug.

Die Fig. 4A zeigt einen gemäss der Erfindung ausgebildeten Elektromotor 90, der in einen Aufzug 70 eingebaut ist. Der Aufzug 70 umfasst eine Kabine 71, die längs einer Führungsfläche 72' an einer Führungsschiene 72 geführt ist. In Fig. 4A ist lediglich ein Teil des Aufzugs 70 in der unmittelbaren Umgebung des Elektromotors 90 gezeigt. Ein Antrieb zum Bewegen der Kabine 71 längs der Führungsfläche 72' und andere übliche Aufzugskomponenten sind nicht dargestellt. Zur Führung der Kabine 71 längs der Führungsfläche 72' ist eine Führungsvorrichtung 75 vorgesehen. Die Führungsvorrichtung 75 umfasst: (i) einen Träger 77, der an der Kabine 71 montiert ist; (ii) ein Führungselement 76, das als eine um eine Drehachse 80 drehbare Rolle ausgebildet ist; (iii) einen Hebel 78, in dem die Drehachse 80 gelagert ist und der um eine im Träger 77 gelagerte, an einem Ende des Hebels 78 angeordnete Drehachse 79 schwenkbar ist; (iv) eine stabförmige Führungseinrichtung 85, die am Träger 77 angeordnet ist und zur Führung des von der Drehachse 79 entfernten Endes des Hebels 78 dient; (v) eine Feder 86, die zwischen dem Hebel 78 und einem Ende des Führungseinrichtung 85 angeordnet und derart vorgespannt ist, dass das Führungselement 76 bei jeder Bewegung der Kabine 71 längs der Führungsschienen 72 mit der Führungsfläche 72' in Kontakt gebracht ist und mit einer bestimmten (in bestimmten Grenzen vorgegebenen) Kraft gegen die jeweilige Führungsfläche 72' gedrückt ist. Mittels einer Schwenkbewegung des Hebels 78 um die Drehachse 79 kann das Führungselement 76 relativ zur Kabine 71 bewegt werden. Im vorliegenden Fall rollt das Führungselement 76 bei einer Bewegung der Kabine 71 längs der Führungsschiene 72 auf der jeweiligen Führungsfläche 72' ab.

Der Elektromotor 90 ist derart an dem Träger 77 und dem Hebel 76 befestigt, dass die momentane Position des Führungselements 76 bezüglich der Kabine 71 mit Hilfe des Elektromotors 90 elektronisch kontrolliert verändert werden kann.

Die Fig. 4B zeigt den Elektromotor 90 in einem Schnitt 4B-4B gemäss Fig. 4A. Der Elektromotor 90 ist als Linearmotor ausgelegt und ist im wesentlichen wie die Elektromotoren 10 bzw. 20 aufgebaut. Der Elektromotor 90 umfasst einen Primärteil 91 zur Erzeugung eines wandernden Magnetfeldes und einen Sekundärteil 92 zur Bereitstellung eines statischen Magnetfelds. Der Sekundärteil 92 entspricht hinsichtlich seines Aufbaus im wesentlichen den Sekundärteilen 12 bzw. 22 der Elektromotoren 10 bzw. 20. Der Sekundärteil 92 umfasst zwei Vorrichtungen 93 bzw. 93', die wie die Vorrichtungen 13 bzw. 13' aufgebaut sind und beispielsweise nach dem in den Fig. 3B-C angegebenen Schema realisiert werden können. Dementsprechend umfassen die Vorrichtungen 13 bzw. 13' jeweils eine auf einem Substrat angeordnete Leiterbahn, die zwecks Erzeugung eines statischen Magnetfelds mit einem elektrischen Strom versorgbar ist. Die jeweiligen Substrate sind plattenförmig und weisen ebene Oberflächen auf. Die Vorrichtungen 93 bzw. 93' sind parallel zueinander angeordnet und an einem Träger 95, der - wie in Fig. 4B gezeigt - einen U-förmigen Querschnitt aufweist, derart befestigt, dass ein Luftspalt zwischen den Vorrichtungen 93 und 93' ausgebildet ist. In diesem Luftspalt ist der Primärteil 91 bewegbar angeordnet. Der Primärteil 91 entspricht hinsichtlich seines Aufbaus im wesentlichen den Primärteilen 11 bzw. 21 der Elektromotoren 10 bzw. 20. Er kann beispielsweise nach dem in der Fig. 3A angegebenen Schema realisiert sein. Zur Erzeugung des wandernden Magnetfelds ist beispielsweise eine auf einem Substrat angeordnete Leiterbahn, die mit einem Wechselstrom versorgbar ist, vorgesehen. Bei Versorgung des Sekundärteils 92 mit einem Gleichstrom und bei einer Versorgung des Primärteils 91 mit einem Wechselstrom kann der Primärteil 91 relativ zum Sekundärteil 92 (synchron mit dem vom Primärteil 91 erzeugten wandernden Magnetfeld) bewegt werden. Diese Bewegung erfolgt im vorliegenden Fall in der Längsrichtung der Führungseinrichtung 85, wie in Fig. 4A durch einen Doppelpfeil angedeutet ist. Wie in den Fig. 4A-B dargestellt ist, ist der Sekundärteil 92 an dem Träger 77 befestigt. Weiterhin ist das von der Drehachse 79 entfernte Ende des Hebels 78 mittels eines Verbindungselements 89 mit dem Primärteil 91 verbunden. Dementsprechend geht im Betrieb des Elektromotors 90 eine Bewegung des Primärteils 91 mit einer Schwenkbewegung des Hebels 78 um die Drehachse 79 einher. Durch eine geeignete elektrische Ansteuerung des Elektromotors 90 kann somit das Führungselement 76 relativ zur Kabine 71 bewegt werden. Entsprechend kann die Position der Kabine 71 relativ zu der Führungsfläche 72' bewegt werden, mit der das Führungselement 76 in Kontakt steht. Insbesondere ist es möglich, durch eine geeignete elektrische Ansteuerung des Elektromotors 90 den Abstand zwischen der Kabine 71 und der Führungsfläche 72' im Bereich gesteuert zu variieren.

Im Aufzug gemäss Fig. 4A und 4B ist eine (nicht dargestellte) Motorsteuerung für den Elektromotor 90 vorgesehen, die in Abhängigkeit von Signalen geeigneter Sensoren die Ströme zur Versorgung des Primärteils 91 und des Sekundärteils 92 bzw. der Vorrichtungen 93 und 93' beispielsweise im Hinblick auf ihre Amplitude, ihre Frequenz und die Lage ihre Phase steuert, um die Position des Führungselementes 76 relativ zur Kabine 71 nach vorgegebenen Kriterien zu beeinflussen. Beispielsweise können Sensoren vorgesehen sein, die während einer Fahrt der Kabine 71 längs der Führungsfläche 72' Schwingungen der Kabine 71, die quer zur Bewegungsrichtung der Kabine 71 auftreten, detektieren. Diese Schwingungen können reduziert oder gegebenenfalls unterdrückt werden, indem die Motorsteuerung den Elektromotor 90 in Abhängigkeit von Signalen dieser Sensoren zu Bewegungen veranlasst, die zu einer Kompensation der Schwingungen der Kabine 71 führen.

Der Aufzug 70 gemäss Fig. 4A und 4B kann im Rahmen der Erfindung auf verschiedene Weisen modifiziert werden.

In einer Variante kann der Elektromotor 90 derart bezüglich der Führungsvorrichtung 75 angeordnet sein, dass der Primärteil 91 ortsfest bezüglich der Kabine 71 und der Sekundärteil 92 zusammen mit dem Führungselement 75 relativ zur Kabine 71 bewegbar ist. Weiterhin kann auf eine der Vorrichtungen 93 bzw. 93' verzichtet werden. Ausserdem kann der Primärteil 91 mehrere Leiterbahnen aufweisen, die unabhängig voneinander mit Strom versorgt werden können, um das wandernde Magnetfeld mit mehreren Strömen zu erzeugen. Diese Ströme können mehrere verschiedene Phasen haben. In diesem Fall muss die Stromversorgung für den Primärteil mehrphasig ausgelegt sein und die Motorsteuerung für den Elektromotor 90 muss geeignet angepasst werden, um die durch die jeweiligen Leiterbahnen des Primärteils 91 fliessenden Ströme hinsichtlich ihrer Amplitude, ihrer Frequenz und ihrer Phase geeignet zu steuern. Weiterhin kann der Träger 95 für die Vorrichtungen 93 und 93' aus einem weichmagnetischen Material gefertigt sein, um einen magnetischen Fluss auf den dem Primärteil 91 abgewandten Seiten der Vorrichtungen 93 und 93' im Träger 95 zu konzentrieren.

In einer weiteren Variante des Aufzugs 70 kann die Kabine 71 an mehreren (beispielsweise an zwei parallel zueinander angeordneten) Führungsschienen 72 geführt sein und an der Kabine 71 können mehrere Führungsvorrichtungen 75 befestigt sein, um die Kabine 71 längs der jeweiligen Führungsschienen 72 zu führen. Zur Führung der Kabine 71 an jeweils einer der Führungsschienen 72 könnten auch mehrere Führungsvorrichtungen 75 an der Kabine 71 befestigt sein, beispielsweise zwei in der Längsrichtung der jeweiligen Führungsschiene 72 beabstandete Führungsvorrichtungen 75. Die Führungsschienen 72 können auch zusätzlich zu der bereits beschriebenen Führungsfläche 72' weitere Führungsflächen, die zur Führung der Kabine 71 in der Längsrichtung der jeweiligen Führungsschiene 72 geeignet sind, aufweisen. Jede Führungsschiene 72 könnte beispielsweise zwei oder drei sich in der Längsrichtung der Führungsschiene 72 erstreckende Führungsflächen aufweisen, wobei jeweils benachbarte Führungsflächen - bezogen auf einen Querschnitt der jeweiligen Führungsschiene 72 - in einem Winkel von weniger als 180° (beispielsweise 90°) zueinander angeordnet sind. Entsprechend können an der Kabine 71 mehrere Führungsvorrichtungen 75 derart angeordnet werden, dass die Kabine 71 - wie im Zusammenhang mit der Fig. 4A beschrieben - mit jeder der Führungsflächen über mindestens ein Führungselement 76 (bevorzugt über zwei Führungselemente 76) in Kontakt gebracht ist, wobei die Führungselemente 76 jeweils bezüglich der Kabine 71 bewegbar sind und die Federn 86 jeweils derart vorgespannt sind, dass die Führungselemente 76 mit einer endlichen Kraft auf die jeweiligen Führungsflächen wirken, selbst wenn die Kabine 71 längs der Führungsschienen 72 bewegt wird und unter dem Einfluss von Störkräften stehen sollte, die quer zur Bewegungsrichtung der Kabine 71 gerichtet sind und die Kabine zu entsprechenden Schwingungen anregen können. Die Anordnung der Kabine 71 bezüglich aller Führungselemente 76 kann - wie oben im Zusammenhang mit den Fig. 4A-B beschrieben ist - mit einer entsprechenden Anzahl von Elektromotoren 90 elektronisch gesteuert variiert werden. Um die Kabine 71 gegen Schwingungen quer zu ihrer Bewegungsrichtung unempfindlich zu machen, können alle relevanten Schwingungsfreiheitsgrade der Kabine 71 mit Sensoren messtechnisch erfasst werden. Zur Reduktion der Schwingungen kann eine Motorensteuerung vorgesehen werden, die die Elektromotoren 90 geeignet ansteuert und zu Bewegungen veranlasst, die zu einer Kompensation der Schwingungen führen. Die Anzahl und die Anordnung der Führungsvorrichtungen 75 und der Elektromotoren 90 kann entsprechend der Anzahl der Schwingungsfreiheitsgrade, die durch die Motorensteuerung erfasst werden sollen, gewählt werden.

Die Fig. 5A zeigt einen Aufzug 100, der eine längs einer Bahn bewegbare Kabine 102 umfasst. Die Fig. 5B stellt den Aufzug 100 in einem Schnitt 5B-5B gemäss Fig. 5A dar.

Eine Führungsschiene 103 ist an einer Wand 101 eines Aufzugsschachts angeordnet. Die Kabine ist bei einer Bewegung längs der Bahn an der Führungsschiene 103 mit konventionellen Führungsmitteln, die allerdings in Fig. 5A-B nicht gezeigt sind, geführt. Ein gemäss der Erfindung ausgebildeter Elektromotor 110 dient als Antrieb zur Bewegung der Kabine 102 längs der Führungsschiene 103. Der Elektromotor 110 ist als Linearmotor konzipiert auf der Grundlage der im Zusammenhang mit den Elektromotoren 10 und 20 erwähnten Konzepte. Der Elektromotor 110 umfasst einen Primärteil 111 zur Erzeugung eines wandernden Magnetfelds und einen Sekundärteil 112 zur Bereitstellung eines statischen Magnetfelds.

Der Primärteil 111 und der Sekundärteil 112 sind derart angeordnet, dass der Primärteil 111 und der Sekundärteil 112 unter einer Wirkung des wandernden Magnetfelds relativ zueinander bewegbar sind. Der Primärteil 111 ist derart angeordnet, dass das mit Hilfe des Primärteils 111 generierbare wandernde Magnetfeld parallel zur Bahn der Kabine wandert. Der Primärteil 111 erstreckt sich längs der gesamten Länge der Bahn der Kabine 102. Er ist an der Führungsschiene 103 befestigt. Der Primärteil 111 ist zusammengesetzt aus mehreren längs der Bahn der Kabine hintereinander angeordnete Module, die jeweils eine auf einem Substrat angeordnete Leiterbahn aufweisen, wobei die Leiterbahnen der verschiedenen Module zwecks Erzeugung des wandernden Magnetfelds mit einem Strom versorgbar sind. Jedes Modul kann beispielsweise wie der Primärteil 11 des Elektromotors 10 konstruiert sein. Die Leiterbahnen der verschiedenen Module können in Reihe geschaltet sein und eine gemeinsame Stromversorgung haben. Die Leiterbahnen der verschiedenen Module können aber auch eine separate Stromversorgung haben. Letzteres bietet die Möglichkeit, das wandernde Magnetfeld - je nach Bedarf - lediglich in einzelnen Teilabschnitten der Bahn der Kabine 102 zu erzeugen.

Der Sekundärteil 112 hat eine kürzere Erstreckung in Richtung der Bahn der Kabine 102 als der Primärteil 111 und ist an der Kabine 102 befestigt. Im vorliegenden Fall ist ein Verbindungselement 109 zwischen dem Sekundärteil 112 und der Kabine 102 angeordnet, um den Sekundärteil 112 in einem geeigneten Abstand zur Kabine 102 zu halten. Der Sekundärteil 112 hat - wie ein Vergleich mit den Fig. 1 B, 2B und 4B andeutet - im wesentlichen dieselbe Struktur wie die Sekundärteile der Elektromotoren 10, 20 und 90.

Der Sekundärteil 112 umfasst zwei Vorrichtungen 113 bzw. 113', die wie die Vorrichtungen 13 bzw. 13' aufgebaut sind und beispielsweise nach dem in den Fig. 3B-C angegebenen Schema realisiert werden können. Dementsprechend umfassen die Vorrichtungen 113 bzw. 113' jeweils eine auf einem Substrat angeordnete Leiterbahn, die zwecks Erzeugung eines statischen Magnetfelds mit einem elektrischen Strom versorgbar ist. Die jeweiligen Substrate sind plattenförmig und weisen ebene Oberflächen auf. Die Vorrichtungen 113 bzw. 113' sind parallel zueinander angeordnet und an einem Träger 115, der - wie in Fig. 5B gezeigt - einen U-förmigen Querschnitt aufweist, derart befestigt, dass ein Luftspalt zwischen den Vorrichtungen 113 und 113' ausgebildet ist. Wie die Träger 15, 25 und 95 kann auch der Träger 115 aus einem weichmagnetischen Material gefertigt sein.

Der Sekundärteil 112 ist derart angeordnet, dass der Primärteil 111 in den Luftspalt zwischen den Vorrichtungen 113 und 113' des Sekundärteils 112 ragt und nicht mit den Vorrichtungen 113 bzw. 113' in Kontakt gebracht wird, wenn die Kabine 102 längs der Führungsschiene 103 bewegt wird. Letzteres setzt voraus, dass die erwähnten Führungsmittel zur Führung der Kabine 103 längs der Führungsschiene 103 das erforderliche Mass an Präzision und Steifigkeit gewährleisten.

Im Betrieb kann die Kabine 102 bewegt oder an einer vorbestimmten Stelle gehalten werden, indem die Leiterbahnen des Primärteils 111 und des Sekundärteils 112 geeignet mit Strom versorgt werden. Wenn der Primärteil 111 derart angesteuert wird, dass er ein wanderndes Magnetfeld erzeugt, dann wird die Kabine 102 synchron mit dem wandernden Magnetfeld längs der Führungsschiene 103 bewegt. Wenn sowohl der Primärteil 111 als auch der Primärteil 112 mit einem Gleichstrom versorgt werden, dann kann die Kabine 102 an einer vorbestimmten Stelle gehalten werden. Der Motor 110 kann so ausgelegt werden, dass die Kraft, die der Elektromotor 110 im Betrieb auf die Kabine 102 ausübt, ausreicht um die Kabine ohne weitere Hilfsmittel zu halten. In diesem Fall kann der Aufzug 100 ohne Tragmittel für die Kabine 102 (d.h. ohne Seile bzw. Riemen) und ohne Gegengewicht betrieben werden.

Der Aufzug 100 kann im Rahmen der Erfindung auf vielfältige Art modifiziert werden. Da der Primärteil 111 und der Sekundärteil 112 - bezogen auf die Längsrichtung der Führungsschiene 103 - eine deutlich unterschiedliche Länge aufweisen, kann die Stromversorgung für die Leiterbahnen des Primärteils 111 und des Sekundärteils 112 auch derart ausgebildet werden, dass Ströme nur in den Bereichen des Primärteils 111 und des Sekundärteils 112 fliessen, in denen der Primärteil 111 mit dem Sekundärteil 112 überlappt. Auf diese Weise kann der Energieverbrauch des Elektromotors 110 reduziert werden. In einer weiteren Variante kann der Aufzug 100 an mehreren Führungsschienen 103 geführt sein. Die Führungsschienen können an verschiedenen Seiten der Kabine 102 angeordnet sein. Entsprechend kann die Kabine 102 mit mehreren Elektromotoren 110 angetrieben werden. Im letzteren Fall können die Primärteile 111 der verschiedenen Elektromotoren 110 an den jeweiligen Führungsschienen angeordnet und die entsprechenden Sekundärteile 111 an der Kabine 102 befestigt werden, beispielsweise nach dem in den Fig. 5A und 5B dargestellten Konzept.

Gemäss einer weiteren Variante des Aufzugs 100 kann der Elektromotor 110 jeweils ersetzt werden durch einen anderen erfindungsgemäss ausgebildeten Elektromotor, dessen Primärteil ortsfest bezüglich der Kabine 103 und dessen Sekundärteil ortsfest bezüglich der Bahn der Kabine 103 angeordnet ist. In diesem Fall erstreckt sich der jeweilige Sekundärteil entlang der gesamten Länge der Bahn. Die Erstreckung des jeweiligen Primärteils entlang der Bahn kann hingegen kurz im Vergleich zur Erstreckung des entsprechenden Sekundärteils sein.

Weiterhin können die erwähnten Elektromotoren und die Kabine mit separaten Mitteln längs der Bahn der Kabine 102 geführt sein. Ausserdem sind die Modifikationen, die für die Elektromotoren 10, 20 und 90 offenbart sind, analog auf den Elektromotor 110 übertragbar.

## Patentansprüche

1. Elektromotor (10, 20, 90, 110), mit einem Primärteil (11, 21, 91, 111) zur Erzeugung eines wandernden Magnetfeldes und einem Sekundärteil (12, 22, 92, 112) zur Bereitstellung eines statischen Magnetfeldes, wobei der Sekundärteil und der Primärteil unter einer Wirkung des wandernden Magnetfeldes relativ zueinander bewegbar sind, **dadurch gekennzeichnet, dass** der Sekundärteil (12, 22, 92, 112) ein Substrat (50) und eine auf das Substrat (50) aufgebrachte Leiterbahn (60) in Form einer Schichtstruktur (13, 13', 23, 23', 93, 93', 113, 113') umfasst und dass die Leiterbahn (60) zwecks Erzeugung des statischen Magnetfeldes mit einem elektrischen Strom (I_{S}) versorgbar ist.

2. Elektromotor nach Anspruch 1, **dadurch gekennzeichnet, dass** das Substrat (50) eine flache Oberfläche aufweist.

3. Elektromotor nach einem der Ansprüche 1-2, **dadurch gekennzeichnet, dass** mindestens ein Abschnitt der Leiterbahn (60) die Form einer Spule aufweist, wobei jede Spule eine oder mehrere Windungen umfasst.

4. Elektromotor nach einem der Ansprüche 1-3, **dadurch gekennzeichnet, dass** die Leiterbahn (60) aus Leiterbahnabschnitten (61, 62) zusammengesetzt ist, die jeweils in verschiedenen Schichten der Schichtstruktur (13, 13', 23, 23', 93, 93', 113, 113') ausgebildet sind, , wobei vorzugsweise ein erster Teil (61) der Leiterbahn (60) an einer ersten Oberfläche des Substrats (50) und ein zweiter Teil (62) der Leiterbahn (60) an einer zweiten Oberfläche des Substrats (50) ausgebildet ist, wobei eine elektrische Verbindung (65) zwischen dem ersten und dem zweiten Teil hergestellt ist.

5. Elektromotor nach einem der Ansprüche 1-4, **dadurch gekennzeichnet, dass** der Primärteil (11) eine auf einem Substrat (30) angeordnete Leiterbahn (40) oder mehrere auf dem Substrat (30) angeordnete Leiterbahnen umfasst und dass die jeweilige Leiterbahn (40) zwecks Erzeugung des wandernden Magnetfeldes mit einem elektrischen Strom (I_{P}(t)), dessen Stromstärke mit der Zeit (t) variiert, versorgbar ist.

6. Elektromotor nach einem der Ansprüche 1-5, **dadurch gekennzeichnet, dass** die Schichtstruktur (13, 13', 23, 23', 93, 93', 113, 113') des Sekundärteils (12, 22, 92, 112) an einem Träger (15, 25, 95, 115) aus einem magnetischen Material befestigt ist, wobei der Träger (15, 25, 95, 115) auf einer dem Primärteil (11, 21, 91, 111) abgewandten Seite der Schichtstruktur (13, 13', 23, 23', 93, 93', 113, 113') angeordnet ist.

7. Aufzug (100) mit einem Elektromotor (110) nach einem der Ansprüche 1-6, wobei der Aufzug (100) eine Kabine (102) umfasst und die Kabine (102) mittels des Elektromotors (110) längs einer Bahn bewegbar ist und wobei der Primärteil (111) ortsfest längs der Bahn und der Sekundärteil (112) an der Kabine (102) angeordnet ist oder der Sekundärteil ortsfest längs der Bahn und der Primärteil an der Kabine angeordnet ist.

8. Aufzug (70) mit einem Elektromotor (90) nach einem der Ansprüche 1-6, wobei der Aufzug (70) eine längs mindestens einer Führungsfläche (72') bewegbare Kabine (71) und ein Führungselement (76), welches an der Kabine (71) bewegbar angeordnet und mit der Führungsfläche (72') in Kontakt gebracht ist, umfasst und das Führungselement (76) mit dem Elektromotor (90) relativ zur Kabine (71) bewegbar ist.

9. Aufzug nach Anspruch 8, wobei der Primärteil (91) zusammen mit dem Führungselement (76) bewegbar und der Sekundärteil (92) ortsfest bezüglich der Kabine (71) angeordnet ist oder dass der Sekundärteil zusammen mit dem Führungselement bewegbar und der Primärteil ortsfest bezüglich der Kabine angeordnet ist.

10. Aufzug nach einem der Ansprüche 8 oder 9, mit einer Steuerung für den Elektromotor (90) zur Reduktion von Schwingungen der Kabine (71) während einer Bewegung der Kabine längs der Führungsfläche (72').
